# EUROPÄISCHE PATENTSCHRIFT

(11) **EP 2 522 960 B1**
(45) Veröffentlichungstag und Bekanntmachung des Hinweises auf die Patenterteilung: **26.03.2014**
(21) Anmeldenummer: 11003980.7
(22) Anmeldetag: 13.05.2011
(51) Int. Cl.: G01D 5/34, G01D 5/347

(54) **Vorrichtung und Verfahren zur Messung des Drehwinkels zweier relativ zueinander rotierender Objekte**
Method and device for measuring the relative angle of two objects which can be rotated relative to each other
Dispositif et procédé de mesure de l'angle de rotation de deux objets tournants l'un par rapport à l'autre

(43) Veröffentlichungstag der Anmeldung: 14.11.2012
(73) Patentinhaber: SICK STEGMANN GmbH, 78166 Donaueschingen (DE)
(72) Erfinder: Speidel, Michael, 79110 Freiburg (DE); Johnson, Mark, Cumbria CA4 8LU (GB)
(74) Vertreter: Patentanwälte Westphal, Mussgnug & Partner

(56) Entgegenhaltungen:
- EP-A1- 0 718 600
- EP-A2- 0 779 499
- DE-U1- 20 102 192
- US-A- 3 306 159
- US-A- 6 049 377

## Beschreibung

Die Erfindung betrifft eine Vorrichtung zur Messung des Drehwinkels zweier relativ zueinander rotierender Objekte gemäß dem Oberbegriff des Anspruchs 1 und ein Verfahren zur Messung des Drehwinkels zweier relativ zueinander rotierender Objekte gemäß dem Oberbegriff des Anspruchs 13.

Für viele Anwendungen ist es von grundlegender Bedeutung, den Drehwinkel eines rotierenden Objekts zu messen. Im allgemeinen wird dabei der Drehwinkel des rotierenden Objekts relativ zu einem feststehenden, mit einem Maßstab behafteten Objekt gemessen. Beispielsweise kann es sich bei dem rotierenden Objekt um die rotierenden Welle eines Motors relativ zu einem feststehenden Maschinenteil handeln. Der Maßstab kann dabei sowohl inkrementell als auch absolut sein. Dabei ist es wünschenswert, eine möglichst toleranzunempfindliche Messung der relativen Drehbewegung durchführen zu können, welche jedoch eine hohe Genauigkeit aufweist. Im Idealfall erfolgt die Messung berührungslos, um mechanischen Verschleiß zu vermeiden.

Die EP 2 187 178 A1 offenbart ein Messprinzip unter Ausnutzung der optischen Polarisation von Licht. Zur Messung des Drehwinkels zweier gegeneinander rotierender Objekte sendet ein Sender wenigstens zwei linear polarisierte Lichtstrahlen aus, deren Polarisationsebenen gegeneinander verdreht sind. Die Lichtintensität der Lichtstrahlen wird gegeneinander phasenverschoben moduliert. Das Licht tritt durch einen Polarisationsfilter hindurch, der sich gegenüber dem Sender in Abhängigkeit vom Drehwinkel dreht. Die Intensität des durch den Polarisationsfilter durchtretenden Lichts wird durch einen Empfänger gemessen und als Drehwinkel abhängiges Signal ausgewertet. Die dort offenbarte Vorrichtung basiert somit sowohl auf der optischen als auch der elektrischen Modulation eines Sendesignals mehrerer elektrischer Lichtquellen. Nachteilig an dieser Vorrichtung ist die Verwendung von mehreren Lichtsendern, da einerseits die Reduktion des Empfangssignals auf die lineare Beziehung zum Drehwinkel nur dann gemacht werden kann, wenn alle Lichtquellen mit der mathematisch exakt gleichen Intensität leuchten, und andererseits die Verwendung von mehreren Lichtquellen höhere Kosten verursacht. Verändert sich aufgrund axialer Toleranzen der Welle während einer Umdrehung der Abstand zwischen den relativ zueinander drehenden Objekten, so kommt es aufgrund des sich ändernden Winkels zu Amplitudenschwankungen im Signal, was zu Winkelfehlern führt. Dies ist dadurch bedingt, dass die Polarisation auch vom Auftreffwinkel des Lichtstrahles auf die Oberfläche eines Polarisators abhängt, was bedeutet, dass eine gewünschte große axiale Toleranz im Bereich von mehr als einem Millimeter zu einem Teil verloren gehen kann.

Als weiterer Stand der Technik werden die US 6 049 377 A, die DE 201 02 192 U1, die US 3 306 159 A, die EP 0 779 499 A2 und die EP 0 718 600 A1 genannt.

Die Aufgabe der Erfindung besteht daher darin, eine verbesserte Vorrichtung zur Messung des Drehwinkels zweier relativ zueinander rotierender Objekte und ein verbessertes Verfahren zur Messung des Drehwinkels zweier relativ zueinander rotierender Objekte anzugeben, welche insbesondere kostengünstiger sind.

Die Aufgabe der Erfindung wird gelöst durch eine Vorrichtung mit den Merkmalen des Patentanspruchs 1 und ein Verfahren mit den Merkmalen des Patentanspruchs 13.

Vorteilhafte Ausgestaltungen und Weiterbildungen der Erfindung sind in den abhängigen Ansprüchen angegeben.

Die erfindungsgemäße Vorrichtung zur Messung des Drehwinkels zweier relativ zueinander rotierender Objekte, mit einem dem einen Objekt zugeordneten Sender, der Licht aussendet, welches entweder polarisiert ist oder mittels eines Polarisationsfilters polarisiert wird, mit einem polarisationsempfindlichen Polarisator, wobei sich der Sender und der Polarisator in Abhängigkeit vom Drehwinkel relativ zueinander drehen, und mit einem Empfänger, der die durch den Polarisator durchtretende Lichtintensität misst, um ein drehwinkelabhängiges Signal zu erzeugen, zeichnet sich dadurch aus, dass der Empfänger mehrere gleichartige Gruppen von Empfangselementen aufweist, welche Licht unterschiedlicher Polarisation detektieren, wobei innerhalb jeder Gruppe die Polarisationsebenen von jeweils zwei Empfangselementen gegeneinander verdreht sind.

Die erfindungsgemäße Vorrichtung ermöglicht die Verwendung sowohl einer unpolarisierten Lichtquelle wie beispielsweise einer LED, deren Licht anschließend mittels eines Polarisationsfilters polarisiert wird, als auch einer polarisierten Lichtquelle wie beispielsweise eines Lasers. Da die Detektion der unterschiedlichen Polarisation erst im Empfänger stattfindet, erfolgt die Detektion der Drehrichtung zwischen sich drehendem Objekt und Empfänger, was die Verwendung einer einzigen Lichtquelle ermöglicht, wodurch insbesondere die Vorrichtung kostengünstig herstellbar ist. Die Verwendung von wenigstens zwei Empfangselementen, vorzugsweise einer Vielzahl von Empfangselementen, verbessert dabei die Genauigkeit der Messung des Drehwinkels, da eine Mittelung über die verschiedenen optischen Kanäle erfolgen kann.

Gemäß einer bevorzugten Ausführungsform der Erfindung ist vor jedem der Empfangselemente jeweils ein Polarisationsfilter angeordnet, wobei die Polarisationsebenen der Polarisationsfilter gegeneinander verdreht sind. Die Anzahl der Empfangselemente bestimmt dabei insbesondere die Anzahl der optischen Kanäle. Diese Ausgestaltung ist kostengünstig realisierbar.

Grundsätzlich können die Polarisationsebenen der Empfangselemente um beliebige Winkel gegeneinander verdreht sein, wobei die Winkel insbesondere eingelernt werden können. Gemäß einer vorteilhaften Ausgestaltung der Erfindung sind die Polarisationsebenen der Empfangselemente jeweils um 180°/n gegeneinander verdreht, wobei n die Anzahl der Empfangselemente ist. Dadurch ergibt sich insbesondere eine gleichmäßige Mittelung über alle Polarisationsrichtungen.

Vorzugsweise weist der Empfänger mehrere Gruppen mit vier Empfangselementen auf, wobei die Polarisationsebenen von jeweils zwei der vier Empfangselemente gegeneinander verdreht sind, insbesondere um 45°. Bei Verwendung mehrfacher Kanäle kann die Auflösung durch statistische Mittelung zusätzlich verbessert werden. Insbesondere ist auch ein Einlernen reproduzierbarer Fehler denkbar.

Im Falle großer Abstände zwischen rotierender Welle und Empfänger lässt sich die Apertur durch optisch abbildende Systeme vergrößern, ohne dabei die teure Fläche der Detektoren vergrößern zu müssen.

Vorzugsweise sind vor dem Empfänger wenigstens zwei keilförmige optische Elemente, vorzugsweise eine der Anzahl der Empfangselemente entsprechende Anzahl von keilförmigen optischen Elementen, angeordnet, deren Oberflächen im Winkel zueinander angeordnet sind und auf denen Polarisationsfilter angeordnet sind, wobei die Polarisationsebenen der Polarisationsfilter gegeneinander verdreht sind. Die optischen Elemente lenken einen einfallenden Lichtstrahl in unterschiedliche Richtungen. Vorzugsweise ist eine Linse oder ein sonstiges abbildendes Element vorhanden, welches die in unterschiedliche Richtungen laufenden Strahlen fokussiert. Beispielsweise ist es möglich, die in unterschiedliche Richtungen laufenden Strahlen zu auf einer Linie angeordneten Fokuspunkten zusammenzuführen. In jedem Fokuspunkt kann ein Empfangselement angeordnet werden, welche insbesondere als Zeilenarray entlang einer Linie angeordnet werden können. Diese Anordnung ermöglicht auf einfache Art und Weise das Bereitstellen von Licht unterschiedlicher Polarisation auf den verschiedenen Empfangselementen.

Vorteilhafterweise sind vor dem Empfänger mehrere, insbesondere N, Streifen von Polarisationsfiltern, deren Polarisationsebenen jeweils gegeneinander verdreht sind, angeordnet, auf welchen mehreren, insbesondere M, Streifen von Phasenplatten, deren Phasen jeweils gegeneinander verschoben sind, quer zu den Streifen von Polarisationsfiltern angeordnet sind, wobei diese Anordnung vorzugsweise auf mehreren keilförmigen optischen Elementen, deren Oberflächen im Winkel zueinander angeordnet sind, angeordnet ist. Durch diese Anordnung entstehen auf einfache Art und Weise eine Vielzahl, insbesondere N x M, verschiedener Polarisationszustände. Besonders bevorzugt ist N gleich M.

Gemäß einer vorteilhaften Ausführungsform der Erfindung ist vor dem Empfänger ein doppelbrechendes Element, vorzugsweise ein Wollaston Prisma, angeordnet, welchem vorzugsweise eine abbildende Optik nachstehend angeordnet ist. Das doppelbrechende Element erzeugt zwei Lichtstrahlen mit zwei zueinander senkrechten Polarisationsrichtungen, deren Amplituden abhängig von der einfallenden Polarisationsrichtung sind. Durch das doppelbrechende Element wird die einfallende Gesamtintensität aufgeteilt, was bedeutet, dass die beiden zueinander senkrechten Polarisationsrichtungen Schwankungen der Eingangsamplitude gleichermaßen erfahren. Daher ist mit einer derartigen Anordnung eine Normierung der Signale auf die Eingangsamplitude möglich. Die beiden zueinander senkrechten Polarisationsrichtungen können auf unterschiedliche Empfangselemente gelenkt werden, beispielsweise mit der abbildenden Optik, um auf diese Art und Weise kostengünstig zwei verschiedene optische Kanäle erzeugen zu können. Da sich beide optischen Kanäle nur um ein Vorzeichen unterscheiden (sin, -sin), müssen zur Positionsbestimmung mindestens zwei Prismen benutzt werden, deren optische Achsen zueinander um einen Winkel verdreht sind. Andernfalls kann aus der Frequenz der elektrischen Signale nur die Rotationsgeschwindigkeit direkt bezogen werden (Tachoapplikationen).

Gemäß einer besonders bevorzugten Ausführungsform der Erfindung weist der Polarisator wenigstens eine Phasenplatte auf, welche vorzugsweise als λ/4-Platte oder λ/2-Platte ausgebildet ist, je nachdem, ob die Anordnung in Transmission oder Reflektion betrieben wird. Phasenplatten sind temperaturstabiler als organische Polarisationsfilme, oft bis zu 200°C, und führen zu einer Frequenzverdopplung des elektrischen Signals, was zu einer verbesserten Winkelauflösung führt. Zudem ist die transmittierte Intensität größer als bei einem linearen Polarisator, welcher nur die Hälfte der Intensität durchlässt.

Vorzugsweise sind der Sender und der Empfänger mit der gleichen elektrischen Modulationsfrequenz beaufschlagbar, um unempfindlicher gegen elektrische Offsets, beispielsweise durch Störlicht, oder Dunkelströme zu werden.

Vorzugsweise ist hinter dem Polarisator ein Reflektor, beispielsweise ein Spiegel oder ein diffus reflektierendes Element, angeordnet, wobei der Reflektor insbesondere senkrecht zur Drehachse angeordnet ist. Vorzugsweise dreht sich der Reflektor mit dem Polarisator. Bei Verwendung eines Reflektors in Kombination mit einer Phasenplatte wird insbesondere ein λ/4-Plättchen verwendet, während ohne Reflektor in Transmission betrieben eine Phasenplatte von λ/2 verwendet wird.

Gemäß einer vorteilhaften Ausführungsform der Erfindung ist im Strahlengang ein Strahlteiler angeordnet, welcher insbesondere nicht polarisierend ausgebildet ist, und dazu vorgesehen ist, einerseits seitlich Licht auskoppeln zu können und andererseits axiale Toleranzen ausgleichen zu können. Zusätzlich kann dabei ein Teil der Eingangsintensität gemessen werden, um zeitliche Drifts der Eingangsamplitude erkennen und gegebenenfalls regeln zu können.

Vorzugsweise sind zwei Sender vorgesehen, welche symmetrisch zur optischen Achse des Empfängers angeordnet sind, um die auf den Empfänger einfallende Intensität zu erhöhen und den Schrägeinfall des Lichts verringern zu können.

Das erfindungsgemäße Verfahren zur Messung des Drehwinkels zwischen zwei relativ zueinander rotierenden Objekten, wobei ein dem einen Objekt zugeordneter Sender Licht aussendet, welches entweder polarisiert ist oder mittels eines Polarisationsfilters polarisiert wird, wobei dieses Licht durch einen Polarisator auf einen Empfänger trifft, wobei sich der Sender und der Polarisator in Abhängigkeit vom Drehwinkel relativ zueinander drehen und wobei die vom Empfänger gemessene Lichtintensität als drehwinkelabhängiges Signal ausgewertet wird, zeichnet sich dadurch aus, dass der Empfänger mehrere gleichartige Gruppen von Empfangselementen aufweist, welche Licht unterschiedlicher Polarisation detektieren, wobei innerhalb jeder Gruppe die Polarisationsebenen von jeweils zwei Empfangselementen gegeneinander verdreht sind.

Vorzugsweise werden die Empfangssignale der Empfangselemente, welche gleiche Polarisationsebenen aufweisen, gemittelt, um die Genauigkeit der Messung zu verbessern.

Gemäß einer bevorzugten Ausführungsform der Erfindung werden die Empfangssignale der Empfangselemente, welche verschiedene Polarisationsebenen aufweisen, unter Berücksichtigung der Phasendifferenz gemittelt.

Die Erfindung wird anhand der nachfolgenden Figuren ausführlich erläutert. Es zeigt:
- Fig. 1a: eine schematische Darstellung einer Vorrichtung zur Messung des Drehwinkels zweier relativ zueinander rotierender Objekte in einer Ausführungsform,
- Fig. 1b: eine schematische Darstellung einer Vorrichtung zur Messung des Drehwinkels zweier relativ zueinander rotierender Objekte in einer weiteren Ausführungsform,
- Fig. 1c: eine Darstellung der Amplitude des vom Empfänger detektierten Lichts in Abhängigkeit vom Drehwinkel für die Vorrichtungen gemäß Fig. 1a und Fig. 1b,
- Fig. 1d: eine schematische Darstellung einer Vorrichtung zur Messung des Drehwinkels zweier relativ zueinander rotierender Objekte in einer weiteren Ausführungsform,
- Fig. 1e: eine schematische Darstellung einer Vorrichtung zur Messung des Drehwinkels zweier relativ zueinander rotierender Objekte in einer weiteren Ausführungsform,
- Fig. 1f: eine schematische Darstellung einer Vorrichtung zur Messung des Drehwinkels zweier relativ zueinander rotierender Objekte in einer weiteren Ausführungsform,
- Fig. 1g: eine schematische Darstellung einer Vorrichtung zur Messung des Drehwinkels zweier relativ zueinander rotierender Objekte in einer weiteren Ausführungsform,
- Fig. 1h: eine Darstellung der Amplitude des vom Empfänger detektierten Lichts in Abhängigkeit vom Drehwinkel für die Vorrichtungen gemäß Fig. 1d, Fig. 1e, Fig. 1f und Fig. 1g,
- Fig. 1i: eine schematische Darstellung einer Vorrichtung zur Messung des Drehwinkels zweier relativ zueinander rotierender Objekte in einer weiteren Ausführungsform,
- Fig. 1j: eine Darstellung der Amplitude des vom Empfänger detektierten Lichts in Abhängigkeit vom Drehwinkel für die Vorrichtung gemäß Fig. 1i,
- Fig. 2: eine schematische Darstellung eines Ausführungsbeispiels eines Empfängers mit mehreren Polarisationsfiltern,
- Fig. 3: eine schematische Darstellung des Strahlengangs einer Vorrichtung zur Messung des Drehwinkels zweier relativ zueinander rotierender Objekte in einer weiteren Ausführungsform,
- Fig. 4a: eine schematische Darstellung eines Ausführungsbeispiels eines Empfängers mit einem doppelbrechenden Element,
- Fig. 4b: eine schematische Darstellung eines weiteren Ausführungsbeispiels eines Empfängers mit einem doppelbrechenden Element,
- Fig. 5: eine schematische Darstellung eines weiteren Ausführungsbeispiels eines Empfängers mit keilförmigen optischen Elementen und
- Fig. 6: eine schematische Darstellung eines weiteren Ausführungsbeispiels eines Empfängers mit keilförmigen optischen Elementen und Phasenplatten.

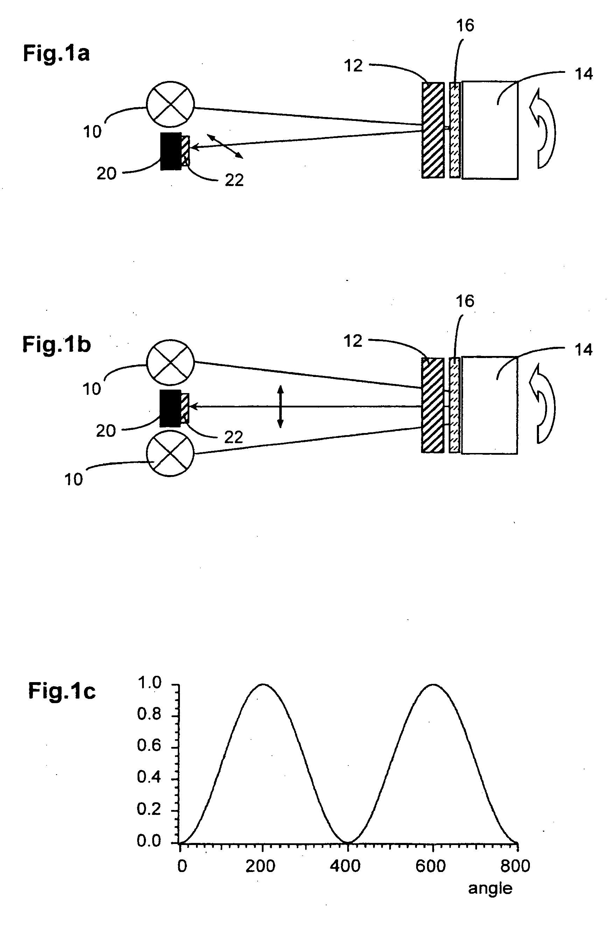

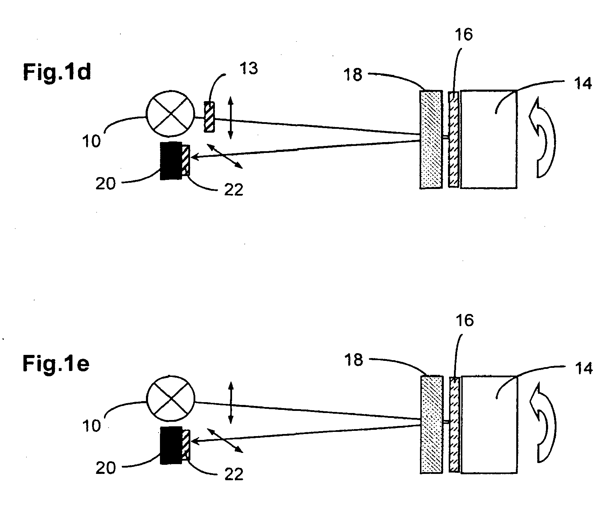

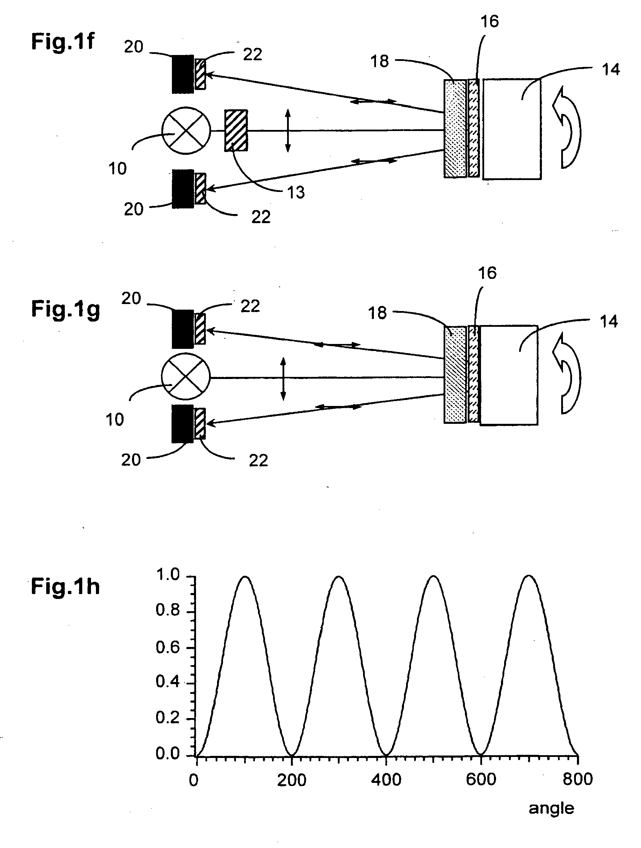

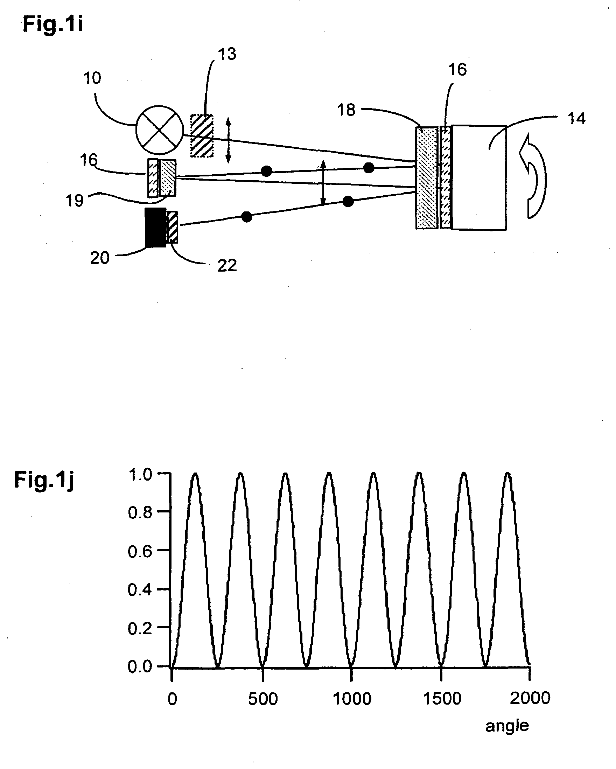

Fig. 1 zeigt verschiedene Ausgestaltungen von Vorrichtungen zur Messung des Drehwinkels zweier relativ zueinander rotierender Objekte. Dabei ist vorliegend lediglich ein Objekt rotierend ausgebildet, nämlich eine Welle 14 beispielsweise eines Motors, wobei der Drehwinkel der Welle 14 in Bezug zu einem feststehenden Teil, beispielsweise dem Motorgehäuse oder einem feststehenden Maschinenteil, ermittelt werden soll. Die Vorrichtungen weisen jeweils mindestens eine Lichtquelle 10 auf, welche feststehend angeordnet ist und beispielsweise dem feststehenden Teil zugeordnet sein kann.

Die Lichtquelle 10 gemäß dem in Fig. 1a dargestellten ersten Ausführungsbeispiel sendet unpolarisiertes Licht aus und ist beispielsweise als LED ausgebildet. Der rotierenden Welle 14 ist ein sich mit der Welle 14 drehender Reflektor 16 zugeordnet, vor welchem ein sich ebenfalls mit der Welle 14 drehender Polarisationsfilter 12 angeordnet ist. Der Reflektor 16 ist als diffus reflektierendes Element ausgebildet, um die beim ersten Durchtritt des Lichts durch das Polarisationsfilter 12 erhaltene Polarisation zu zerstören. Es ist ein Empfänger 20 mit wenigstens zwei Empfangselementen vorgesehen, mit welchem Licht unterschiedlicher Polarisation detektiert wird. Dazu sind in einer Ausführungsform vor den Empfangselementen Polarisationsfilter 22 angeordnet, deren Polarisationsebenen gegeneinander gedreht sind. Verschiedene Ausführungsformen des Empfängers 20 werden nachfolgend noch detaillierter beschrieben. Abhängig vom Drehwinkel der rotierenden Welle 14 ändert sich die Intensität des Lichts, welches in den Empfangselementen detektiert wird, und ist maximal, wenn die Polarisationsebene des Polarisators 12 mit der Polarisationsebene des Polarisationsfilters 22 des Empfängers 20 übereinstimmt, und minimal, wenn die Polarisationsebene des Polarisators 12 senkrecht zur Polarisationsebene des Polarisationsfilters 22 des Empfängers steht (vgl. Fig. 1c). Der Drehwinkel kann somit ohne weitere Hilfsmittel über eine halbe Drehung der Welle 14 gemessen werden. Die Verwendung von wenigstens zwei Empfangselementen führt zu der entsprechenden Zahl von optischen Kanälen, die ausgewertet werden können und gegebenenfalls gemittelt werden können, wodurch die Genauigkeit der Messung des Drehwinkels verbessert werden kann. Dabei findet die Detektion der unterschiedlichen Polarisationsrichtungen erst in den Empfangselementen statt, so dass die Detektion der Drehrichtung zwischen der rotierenden Welle 14 und dem Empfänger 20 erfolgt, was die Verwendung einer einzigen Lichtquelle 10 ermöglicht.

Fig. 1b zeigt eine weitere Vorrichtung zur Messung des Drehwinkels zweier relativ zueinander rotierender Objekte mit einer unpolarisierten Lichtquelle 10, deren Licht durch das sich mit der Welle 14 drehende Polarisationsfilter 12 polarisiert wird und ein weiterer Polarisationsfilter 22 vor dem Empfänger 20 angeordnet ist. Dabei ist eine zweite Lichtquelle 10 vorgesehen, welche symmetrisch zur optischen Achse des Empfängers 20 angeordnet ist und mit welcher einerseits ein symmetrischer Aufbau erreicht wird und andererseits die Gesamtintensität des auf den Empfänger 20 fallenden Lichts erhöht wird. Auch mit der Vorrichtung gemäß Fig. 1b kann ohne weitere Hilfsmittel der Drehwinkel über eine halbe Drehung der Welle 14 gemessen werden (vgl. Fig. 1c).

In den Fig. 1d, 1e, 1f und 1g sind vier Vorrichtungen zur Messung des Drehwinkels zweier relativ zueinander rotierender Objekte dargestellt, bei welchen an der rotierenden Welle 14 vor dem Reflektor 16 eine Phasenplatte 18, insbesondere in Form einer λ/4-Platte, angeordnet ist. Bei einer Anordnung ohne Reflektor 16, bei welcher die Lichtquelle 10 und der Empfänger 20 auf verschiedenen Seiten der Phasenplatte 18 angeordnet sind und somit das Licht nur einmal die Phasenplatte 18 passiert, wird statt der λ/4-Platte eine λ/2-Platte verwendet. Die λ/4-Platte bzw. λ/2-Platte ersetzen den sich drehenden Polarisationsfilter 12 der Vorrichtungen gemäß Fig. 1a und 1b. Phasenplatten 18 sind insbesondere in Form von Kristallen erhältlich und weisen eine Temperaturbeständigkeit von bis zu 200°C auf. Die Phasenplatten 18 haben weiterhin den Vorteil, dass eine Frequenzverdopplung stattfindet, so dass zwar ohne weitere Hilfsmittel nur noch über eine viertel Drehung der Welle 14 der Drehwinkel gemessen werden kann (vgl. Fig. 1h), die Messung jedoch mit deutlich verbesserter Auflösung erfolgen kann. Der Reflektor 16 ist in diesen Ausführungsbeispielen als Spiegel 16 ausgebildet, um die durch die Phasenplatte 18 erzeugte zirkulare Polarisation zu erhalten.

Die Vorrichtungen gemäß Fig. 1d bis 1g unterscheiden sich lediglich in der Art der Lichtquelle 10 und der Zahl und Anordnung der Empfangselemente. Während in den Vorrichtungen gemäß Fig. 1e und 1g eine polarisierte Lichtquelle 10 verwendet wird, weist die Vorrichtung gemäß Fig. 1d und 1f eine unpolarisierte Lichtquelle 10 auf, deren Licht durch einen weiteren feststehenden Polarisationsfilter 13 polarisiert wird. Während in den Vorrichtungen gemäß Fig. 1d und 1e lediglich ein Empfänger 20 mit wenigstens zwei Empfangselementen vorgesehen ist, weisen die Vorrichtungen gemäß Fig. 1f und 1g zwei Empfänger 20 mit jeweils wenigstens zwei Empfangselementen auf, um einen symmetrischen Aufbau zu erreichen.

Fig. 1i zeigt eine Vorrichtung zur Messung des Drehwinkels zweier relativ zueinander rotierender Objekte, bei welcher zwischen der sich mit der Welle 14 drehenden λ/4-Platte und dem Empfänger 20 eine weitere λ/4-Platte 19 angeordnet ist, hinter welcher ein weiterer Spiegel 17 angeordnet ist, so dass nach Reflektion des Lichts an dem Spiegel 16 der sich drehenden Welle 14 das Licht durch die weitere λ/4-Platte 19 durchtritt, an dem hinter dieser λ/4-Platte 19 angeordneten Spiegel 16 reflektiert wird, die λ/4-Platte 19 erneut passiert und auf die an der Welle 14 angeordnete λ/4-Platte 18 fällt, diese passiert, an dem an der Welle 14 angeordneten Spiegel 16 erneut reflektiert wird, die an der Welle 14 angeordnete λ/4-Platte 18 nochmals passiert und schließlich in dem Empfänger 20 detektiert wird. Durch diese Anordnung wird eine weitere Frequenzverdopplung erreicht, was dazu führt, dass zwar der Drehwinkel ohne weitere Hilfsmittel nur noch über eine achtel Drehung der Welle 14 gemessen werden kann (vgl. Fig. 1j), die Auflösung der Messung jedoch weiter verbessert wird.

Bei allen Anordnungen der Vorrichtungen zur Messung des Drehwinkels zweier relativ zueinander rotierender Objekte ist es möglich, die Lichtquelle 10 oder die Lichtquellen 10 und den Empfänger 20 mit der gleichen elektrischen Modulationsfrequenz zu beaufschlagen, um die Vorrichtung unempfindlicher gegen elektrische Offsets durch Störlicht und Dunkelströme zu machen. Die Demodulation über einen Tiefpass definiert die Bandbreite der Vorrichtung.

Wesentlicher Bestandteil der verschiedenen in Fig. 1 dargestellten Ausführungsformen der Vorrichtung zur Messung des Drehwinkels zweier relativ zueinander rotierender Objekte ist der Empfänger 20, welcher wenigstens zwei Empfangselemente aufweist, welche Licht unterschiedlicher Polarisation detektieren. Dadurch wird die Zahl der optischen Kanäle, die zur Auswertung zur Verfügung stehen, erhöht und die Genauigkeit der Messung verbessert. Der Erfindung unterfallen lediglich Empfänger 20, welche mehrere gleichartige Gruppen von Empfangselementen aufweisen, welche Licht unterschiedlicher Polarisation detektieren, wobei innerhalb einer Gruppe die Polarisationsebenen von jeweils zwei Empfangselementen gegeneinander verdreht sind.

Nachfolgend werden zum besseren Verständnis von Ausführungsformen der Erfindung verschiedene Ausführungsformen des Empfängers 20 beschrieben, wobei insbesondere jede der nachfolgend beschriebenen Ausführungsformen des Empfängers 20 in jeder der Ausführungsformen der Vorrichtungen zur Messung des Drehwinkels zweier relativ zueinander rotierender Objekte gemäß Fig. 1 zur Anwendung kommen kann.

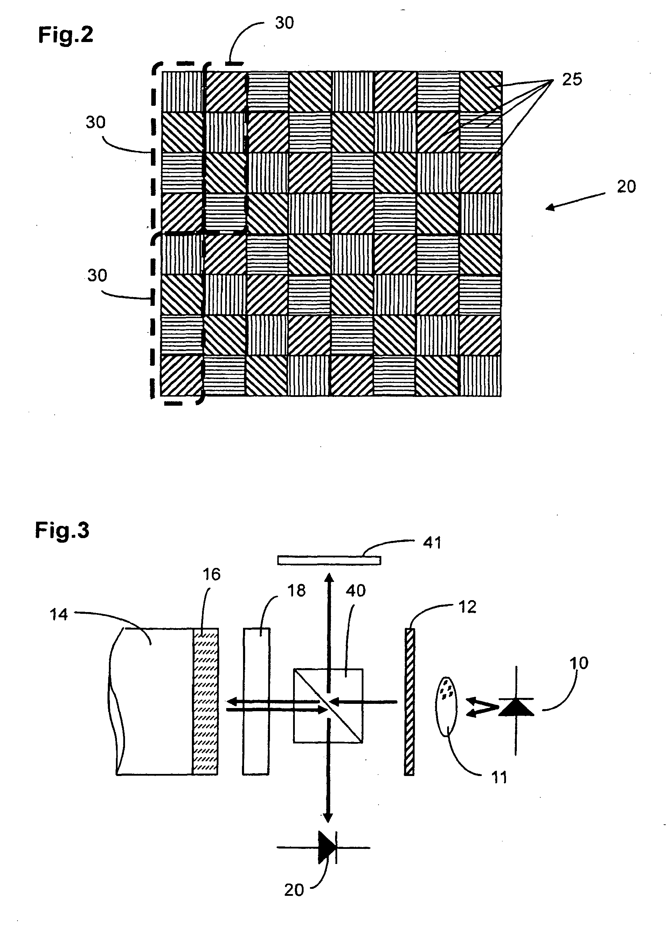

Fig. 2 zeigt einen Empfänger 20, welcher in einer Matrix angeordnete Empfangselemente aufweist. Dabei sind insbesondere jeweils 8 Empfangselemente in 8 Zeilen angeordnet. Vor jedem der Empfangselemente ist ein Polarisationsfilter angeordnet. Dabei sind die Polarisationsfilter benachbarter Empfangselemente gegeneinander verdreht.

Grundsätzlich besteht die Möglichkeit, bei n Empfangselementen die Polarisationsebenen der Empfangselemente um beliebige Winkel gegeneinander zu verdrehen, vorzugsweise jeweils um 180°/n gegeneinander zu verdrehen, wobei n die Anzahl der Empfangselemente ist. Dadurch ergeben sich n unterschiedliche optische Kanäle. Die beliebigen Winkel können insbesondere eingelernt werden.

Erfindungsgemäß sind mehrere gleichartige Gruppen von Empfangselementen vorgesehen, innerhalb derer die Polarisationsebenen von jeweils zwei Empfangselementen gegeneinander verdreht sind. Durch das Vorsehen mehrerer gleichartiger Gruppen werden mehrfache Kanäle gebildet, über welche zur verbesserten Genauigkeit der Auswertung gemittelt werden kann. Über die unterschiedlichen optischen Kanäle kann zur Verbesserung der Genauigkeit der Messung ebenfalls gemittelt werden, wobei die unterschiedlichen Polarisationsrichtungen der verschiedenen optischen Kanäle berücksichtigt werden müssen. Vorliegend

weist der Empfänger 20 sechzehn Gruppen 30 mit jeweils vier Empfangselementen 25 auf, wobei die Polarisationsebenen von jeweils zwei der vier Empfangselemente 25 gegeneinander verdreht sind, insbesondere um 45°. In anderen Ausführungsformen des Empfängers 20 können einige der Empfangselemente des Empfängers 20 gemäß Fig. 2 durch eine Phasenplatte, beispielsweise eine λ/4-Platte, abgedeckt werden, um auch elliptische oder zirkulare Polarisation detektieren zu können.

Figur 3 zeigt schematisch den Strahlengang eines weiteren Ausführungsbeispiels einer Vorrichtung zur Messung des Drehwinkels zweier relativ zueinander rotierender Objekte. Die Lichtquelle 10 ist als unpolarisierte Lichtquelle 10 ausgebildet, beispielsweise als LED. Das von der Lichtquelle 10 abgestrahlte Licht wird durch eine Linse 11 kollimiert und mit Hilfe des Polarisationsfilters 12 linear polarisiert. An der rotierenden Welle 14 ist der sich mit drehende Spiegel 16 sowie die sich mit drehende λ/4-Platte 18 angeordnet, wobei der Spiegel 16 zwischen der Welle 14 und der λ/4-Platte 18 angeordnet ist. Zwischen dem Polarisationsfilter 12 und der λ/4-Platte 18 ist ein Strahlteiler 40 angeordnet, mit Hilfe dessen das von dem Spiegel 16 reflektierte Licht seitlich ausgekoppelt werden kann, um von einem seitlich angeordneten Empfänger 20 detektiert zu werden. Dabei kann die Position von der Lichtquelle 10 und dem Empfänger 20 auch vertauscht werden. Diese Anordnung weist den Vorteil auf, dass ein axialer Strahlverlauf ermöglicht wird, was dazu führt, dass axiale Toleranzen zwischen der Lichtquelle 10 und der Welle 14 ausgeglichen werden können. Zusätzlich kann dabei ein Teil der Eingangsintensität am Strahlteiler 40 seitlich ausgekoppelt und beispielsweise mit Hilfe einer Photodiode 41 gemessen werden, um zeitliche Drifts der Eingangsamplitude erkennen und gegebenenfalls regeln zu können.

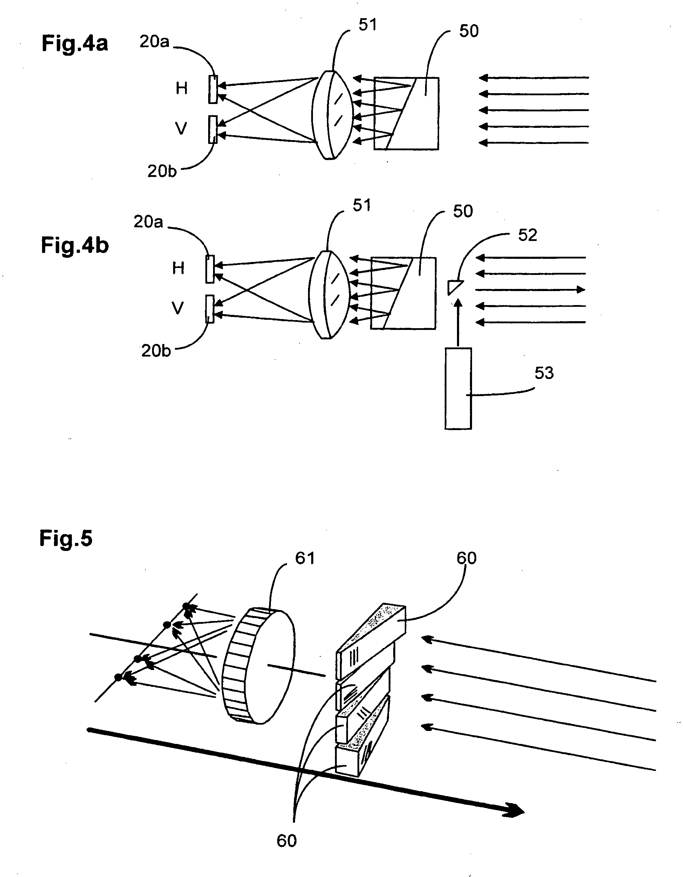

Figur 4a zeigt schematisch eine alternative Möglichkeit zur Bereitstellung eines Empfängers, der wenigstens zwei Empfangselemente aufweist, welche Licht unterschiedlicher Polarisation detektieren. Der Empfänger 20 weist zwei Empfangselemente 20a, 20b auf. Das Licht einer polarisierten Lichtquelle, beispielsweise eines Lasers 53 fällt zunächst auf ein doppelbrechendes Element, beispielsweise ein Wollaston Prisma 50. Das doppelbrechende Element trennt den polarisierten Strahl in zwei zueinander senkrechte Polarisationsrichtungen, deren Amplituden abhängig von der einfallenden Polarisationsrichtung sind. Mithilfe einer abbildenden Optik 51 wird das Licht der einen Polarisationsrichtung auf das eine Empfangselement 20a gelenkt, während das Licht der dazu senkrechten anderen Polarisationsrichtung auf das andere Empfangselement 20b gelenkt wird. Damit detektieren die beiden Empfangselemente 20a, 20b Licht unterschiedlicher Polarisation. Um einen kollimierten Strahlengang zu erhalten, kann das Licht des Lasers 53 auch mittels eines Spiegels 52 eingekoppelt werden (vgl. Fig. 4b), was insbesondere zu einem kompakten Aufbau führt. Nicht gezeigt ist eine Anordnung, welche keine abbildende Optik 51 aufweist, was jedoch ebenfalls möglich wäre. Mit einer derartigen Anordnung lassen sich die von den Empfangselementen 20a, 20b detektierten Signale amplitudennormiert darstellen, da die einfallende Gesamtintensität durch das doppelbrechende Element aufgeteilt wird und somit beide Polarisationsrichtungen Schwankungen der Eingangsamplitude gleichermaßen erfahren.

In Figur 5 ist schematisch eine weitere alternative Ausführungsform des Empfängers 20 dargestellt, welcher wenigstens zwei Empfangselemente aufweist, welche Licht unterschiedlicher Polarisation detektieren. Der Empfänger 20 weist dabei in einer Reihe entlang der Linie A angeordnete Empfangselemente auf, welche somit insbesondere durch ein herkömmliches, kostengünstiges Zeilenarray gebildet werden können. Vor den Empfangselementen sind mehrere keilförmige optische Elemente in einer Reihe 60 angeordnet, deren Oberflächen im Winkel zueinander angeordnet sind und welche einen kollimiert einfallenden Lichtstrahl in unterschiedliche Richtungen lenken. Zwischen den keilförmigen Elementen 60 und dem Zeilenarray ist eine abbildende Optik, insbesondere eine Linse 61 angeordnet, welche die in unterschiedliche Richtungen laufenden Strahlen zu auf der Linie A angeordneten Fokuspunkten zusammenführt, wobei in den Fokuspunkten die Empfangselemente angeordnet sind. Auf den keilförmigen Elementen 60 sind Polarisationsfilter angeordnet, wobei die Polarisationsebenen der benachbarten Polarisationsfilter gegeneinander verdreht sind. Durch die verschiedenen Empfangselemente des Zeilenarrays werden somit verschiedene Polarisationsrichtungen detektiert.

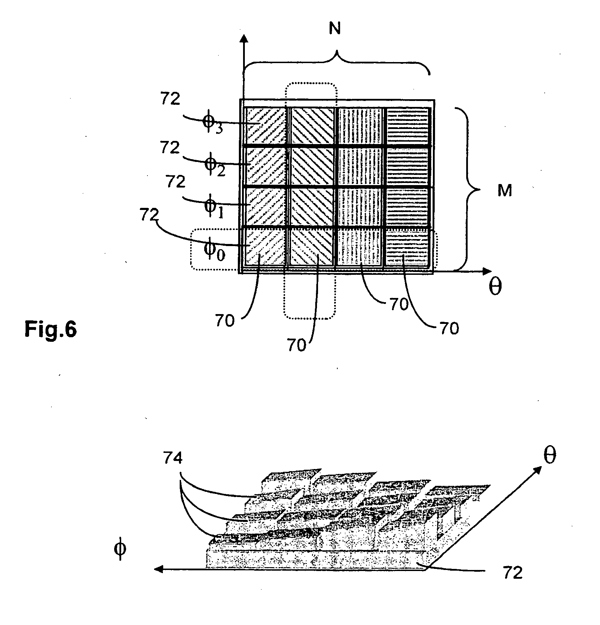

In Figur 6 ist schematisch eine weitere alternative Ausführungsform des Empfängers 20 dargestellt, welcher wenigstens zwei Empfangselemente aufweist, welche Licht unterschiedlicher Polarisation detektieren. Vor dem Empfänger sind mehrere, insbesondere N, Streifen von Polarisationsfiltern 70, deren Polarisationsebenen jeweils gegeneinander verdreht sind, angeordnet. Auf diesen Streifen sind mehrere, insbesondere M, Streifen von Phasenplatten 72, deren Phasen jeweils gegeneinander, insbesondere um die gleiche Phasendifferenz, verschoben sind, quer zu den Streifen von Polarisationsfiltern 70 angeordnet. Dadurch entstehen N x M unterschiedliche Polarisationszustände. Diese Anordnung ist vorzugsweise auf der Rückseite von mehreren keilförmigen optischen Elementen 74, deren Oberflächen im Winkel zueinander angeordnet sind, angeordnet. Damit wird ein schachbrettartiges Polarisationsmuster erzeugt, welches mittels einer abbildenden Optik auf N X M Empfangselemente projiziert werden kann. Insbesondere ist N gleich M. Eine derartige Matrix ist:einfacher zu positionieren als ausgeschnittene Quadranten, die individuell und relativ zueinander positioniert werden müssen. Die dazu notwendige 2D-Prismenstruktur der Anordnung gemäß Figur 6 lässt sich kostengünstig mittels bekannter Spritzgussverfahren und Heißprägen herstellen.

Vorzugsweise können die unterschiedlichen Polarisationszustände auf einen Imagesensor abgebildet werden. Dann ist es möglich, dass Bildverarbeitungsalgorithmen zur Mittelung der gewünschten optischen Kanäle eingesetzt werden können.

In einer weiteren Ausführungsform könnte der "einfachste" Detektor in einer schachbrettartigen Anordnung von räumlich zueinander verkippten Photosensoren bestehen, welche aufgrund der unterschiedlichen Kippwinkel den einfallenden Strahl unterschiedlich polarisieren und damit unabhängige optische Kanäle erzeugen.

Der Empfänger kann auch als integrierter Polarisationssensor mit einem Polarisationssensorelement ausgebildet sein, wobei das Polarisationssensorelement einen optoelektronischen Sensor und eine Polarisationsfilterstruktur aufweist, wobei der optoelektronische Sensor und die Polarisationsfilterstruktur gemeinsam auf einem Halbleitersubstrat integriert sind. Einen derartigen integrierten Polarisationssensor zeigt beispielsweise die WO 2009/112174 A1. Zur Herstellung des Photosensors können bekannte CMOS-Prozesse verwendet werden. Ein derartiger Empfänger kann kostengünstig mit hoher Auflösung hergestellt werden. Einen alternativen polarisationsempfindlichen Empfänger offenbart die DE10 2005 031 966 A1.

In den zuvor beschriebenen Ausführungsformen kann grundsätzlich auch jedes dort beschriebene Empfangselement mehrere einzelne Empfangselemente umfassen, um die Zahl der optischen Kanäle weiter zu erhöhen.

## Patentansprüche

1. Vorrichtung zur Messung des Drehwinkels zweier relativ zueinander rotierender Objekte, mit einem dem einen Objekt zugeordneten Sender (10), der Licht aussendet, welches entweder polarisiert ist oder mittels eines Polarisationsfilters polarisiert wird, mit einem polarisationsempfindlichen Polarisator, wobei sich der Sender (10) und der Polarisator in Abhängigkeit vom Drehwinkel relativ zueinander drehen, und mit einem Empfänger (20), der die durch den Polarisator durchtretende Lichtintensität misst, um ein drehwinkelabhängiges Signal zu erzeugen, **dadurch gekennzeichnet, dass** der Empfänger (20) mehrere gleichartige Gruppen (30) von Empfangselementen (25) aufweist, welche Licht unterschiedlicher Polarisation detektieren, wobei innerhalb jeder Gruppe (30) die Polarisationsebenen von jeweils zwei Empfangselementen (25) gegeneinander verdreht sind.

2. Vorrichtung nach Anspruch 1,
**dadurch gekennzeichnet, dass** vor jedem der Empfangselemente (25) jeweils ein Polarisationsfilter angeordnet ist, wobei die Polarisationsebenen der Polarisationsfilter gegeneinander verdreht sind.

3. Vorrichtung nach Anspruch 2,
**dadurch gekennzeichnet, dass** die Polarisationsebenen der Empfangselemente (25) jeweils um 180°/n gegeneinander verdreht sind, wobei n die Anzahl der Empfangselemente ist.

4. Vorrichtung nach Arispruch 2 oder 3,
**dadurch gekennzeichnet, dass** der Empfänger (20) mehrere Gruppen (30) mit vier Empfangselementen (25) aufweist, wobei die Polarisationsebenen von jeweils zwei der vier Empfangselemente (25) gegeneinander verdreht sind, insbesondere um 45°.

5. Vorrichtung nach einem der vorhergehenden Ansprüche,
**dadurch gekennzeichnet, dass** vor dem Empfänger (20) wenigstens zwei keilförmige optische Elemente (60), vorzugsweise eine der Anzahl der Empfangselemente (25) entsprechende Anzahl von keilförmigen optischen Elementen (60), angeordnet sind, deren Oberflächen im Winkel zueinander angeordnet sind und auf denen Polarisationsfilter angeordnet sind, wobei die Polarisationsebenen der Polarisationsfilter gegeneinander verdreht sind.

6. Vorrichtung nach einem der vorhergehenden Ansprüche,
**dadurch gekennzeichnet, dass** vor dem Empfänger (20) mehrere Streifen von Polarisationsfiltern (70), deren Polarisationsebenen jeweils gegeneinander verdreht sind, angeordnet sind, auf welchen mehreren Streifen von Phasenplatten (72), deren Phasen jeweils gegeneinander verschoben sind, quer zu den Streifen von Polarisationsfiltern (70) angeordnet sind, wobei diese Anordnung vorzugsweise auf der Rückseite von mehreren keilförmigen optischen Elementen (74), deren Oberflächen im Winkel zueinander angeordnet sind, angeordnet ist.

7. Vorrichtung nach einem der vorhergehenden Ansprüche,
**dadurch gekennzeichnet, dass** vor dem Empfänger (20) ein doppelbrechendes Element, vorzugsweise ein Wollaston Prisma (50), angeordnet ist, welchem vorzugsweise eine abbildende Optik (51) nachstehend angeordnet ist.

8. Vorrichtung nach einem der vorhergehenden Ansprüche,
**dadurch gekennzeichnet, dass** der Polarisator wenigstens eine Phasenplatte (18) aufweist, welche vorzugsweise als λ/4-Platte oder λ/2-Platte ausgebildet ist.

9. Vorrichtung nach einem der vorhergehenden Ansprüche,
**dadurch gekennzeichnet, dass** der Sender (10) und der Empfänger (20) mit der gleichen elektrischen Modulationsfrequenz beaufschlagbar sind.

10. Vorrichtung nach einem der vorhergehenden Ansprüche,
**dadurch gekennzeichnet, dass** hinter dem Polarisator (12) ein Reflektor (16), beispielsweise ein Spiegel oder ein diffus reflektierendes Element, angeordnet ist.

11. Vorrichtung nach einem der vorhergehenden Ansprüche,
**dadurch gekennzeichnet, dass** im Strahlengang ein Strahlteiler (40) angeordnet ist.

12. Vorrichtung nach einem der vorhergehenden Ansprüche,
**dadurch gekennzeichnet, dass** zwei Sender (10) vorgesehen sind, welche symmetrisch zur optischen Achse des Empfängers angeordnet sind.

13. Verfahren zur Messung des Drehwinkels zwischen zwei relativ zueinander rotierenden Objekten, wobei ein dem einen Objekt zugeordneter Sender (10) Licht aussendet, welches entweder polarisiert ist oder mittels eines Polarisationsfilters polarisiert wird, wobei dieses Licht durch einen Polarisator auf einen Empfänger (20) trifft, wobei sich der Sender (10) und der Polarisator in Abhängigkeit vom Drehwinkel relativ zueinander drehen und wobei die vom Empfänger (20) gemessene Lichtintensität als drehwinkelabhängiges Signal ausgewertet wird,
**dadurch gekennzeichnet, dass** der Empfänger (20) mehrere gleichartige Gruppen (30) von Empfangselementen (25) aufweist, welche Licht unterschiedlicher Polarisation detektieren, wobei innerhalb jeder Gruppe (30) die Polarisationsebenen von jeweils zwei Empfangselementen (25) gegeneinander verdreht sind.

14. Verfahren nach Anspruch 13,
**dadurch gekennzeichnet, dass** die Empfangssignale der Empfangselemente (25), welche gleiche Polarisationsebenen aufweisen, gemittelt werden.

15. Verfahren nach Anspruch 13 oder 14,
**dadurch gekennzeichnet, dass** die Empfangssignale der Empfangselemente (25), welche verschiedene Polarisationsebenen aufweisen, unter Berücksichtigung der Phasendifferenz gemittelt werden.

## Claims

1. An apparatus for measuring the rotary angle of two objects rotating relative to each other, with an emitter (10) which is associated with an object and which emits light which either has been polarized or is polarized by means of a polarization filter, with a polarization-sensitive polarizer, wherein the emitter (10) and the polarizer rotate relative to each other in a manner dependent upon the rotary angle, and with a receiver (20) which measures the light intensity passing through the polarizer in order to produce a signal dependent upon the rotary angle, **characterized in that** the receiver (20) has a plurality of similar groups (30) of receiving elements (25) which detect light of different polarization, wherein the polarization planes of two receiving elements (25) in each case are rotated with respect to each other within each group (30).

2. An apparatus according to claim 1, **characterized in that** one polarization filter is arranged in each case in front of each of the receiving elements (25), wherein the polarization planes of the polarization filters are rotated with respect to each other.

3. An apparatus according to claim 2, **characterized in that** the polarization planes of the receiving elements (25) are rotated by 180°/n in each case with respect to each other, in which n is the number of the receiving elements.

4. An apparatus according to claim 2 or 3, **characterized in that** the receiver (20) has a plurality of groups (30) with four receiving elements (25), wherein the polarization planes of two of the four receiving elements (25) in each case are rotated with respect to each other, for example by 45°.

5. An apparatus according to any one of the preceding claims, **characterized in that** the receiver (20) has arranged in front of it at least two wedge-shaped optical elements (60), preferably a number of wedge-shaped optical elements (60) corresponding to the number of the four receiving elements (25), the surfaces of which wedge-shaped optical elements (60) are arranged at an angle to one another and on which are arranged polarization filters, wherein the polarization planes of the polarization filters are rotated with respect to one another.

6. An apparatus according to any one of the preceding claims, **characterized in that** the receiver (20) has arranged in front of it a plurality of strips of polarization filters (70), the polarization planes of which are rotated with respect to one another in each case, on which a plurality of strips of phase plates (72), the phases of which are shifted with respect to one another in each case, are arranged transversely to the strips of polarization filters (70), wherein this arrangement is preferably arranged on the rear side of a plurality of wedge-shaped optical elements (74), the surfaces of which are arranged at an angle to one another.

7. An apparatus according to any one of the preceding claims, **characterized in that** the receiver (20) has arranged in front of it a birefringent element, preferably a Wollaston prism (50), after which an imaging lens (51) is preferably arranged.

8. An apparatus according to any one of the preceding claims, **characterized in that** the polarizer has at least one phase plate (18) which is preferably designed in the form of a λ/4 plate or a λ/2 plate.

9. An apparatus according to any one of the preceding claims, **characterized in that** the emitter (10) and the receiver (20) are capable of being acted upon with the same electrical modulation frequency.

10. An apparatus according to any one of the preceding claims, **characterized in that** a reflector (16), for example a mirror or a diffusely reflecting element, is arranged behind the polarizer (12).

11. An apparatus according to any one of the preceding claims, **characterized in that** a beam splitter (40) is arranged in the beam path.

12. An apparatus according to any one of the preceding claims, **characterized in that** two emitters (10) are provided, which are arranged symmetrically with respect to the optical axis of the receiver.

13. A method of measuring the rotary angle between two objects rotating relative to each other, wherein an emitter (10) associated with an object emits light which either has been polarized or is polarized by means of a polarization filter, wherein this light strikes a receiver (20) through a polarizer, wherein the emitter (10) and the polarizer rotate relative to each other in a manner dependent upon the rotary angle, and wherein the light intensity measured by the receiver (20) is evaluated as a signal dependent upon the rotary angle, **characterized in that** the receiver (20) has a plurality of similar groups (30) of receiving elements (25) which detect light of different polarization, wherein the polarization planes of two receiving elements (25) in each case are rotated with respect to each other within each group (30).

14. A method according to claim 13, **characterized in that** the received signals of the receiving elements (25), which have the same polarization planes, are averaged.

15. A method according to claim 13 or 14, **characterized in that** the received signals of the receiving elements (25), which have different polarization planes, are averaged whilst taking into consideration the phase difference.

## Revendications

1. Dispositif de mesure de l'angle de rotation de deux objets mobiles en rotation l'un par rapport à l'autre comportant un émetteur (10) associé à l'un des objets qui émet de la lumière qui est soit polarisée soit polarisée par un filtre de polarisation, et un polariseur sensible à la polarisation, l'émetteur (10) et le polariseur étant mobile en rotation l'un par rapport à l'autre selon l'angle de rotation, ainsi qu'un récepteur (20) qui mesure l'intensité de la lumière traversant le polariseur pour produire un signal dépendant de l'angle de rotation,
**caractérisé en ce que**
- le récepteur (20) comporte plusieurs groupes (30) similaires d'éléments de réception (25) qui détectent de la lumière de différentes polarisations, à l'intérieur de chaque groupe (30), les plans de polarisation de deux éléments de réception respectifs (25) étant décalés en rotation l'un par rapport à l'autre.

2. Dispositif conforme à la revendication 1,
**caractérisé en ce qu'**
en amont de chacun des éléments de réception (25) est respectivement monté un filtre de polarisation, les plans de polarisation des filtres de polarisation étant décalés en rotation les uns par rapport aux autres.

3. Dispositif conforme à la revendication 2,
**caractérisé en ce que**
les plans de polarisation des éléments de réception (25) sont respectivement décalés de 180°/n les uns par rapport aux autres, n étant le nombre d'éléments de réception.

4. Dispositif conforme à la revendication 2 ou 3,
**caractérisé en ce que**
le récepteur (20) comporte plusieurs groupes (30) de trois éléments de réception (25), les plans de polarisation de deux respectifs des quatre éléments de réception étant décalés en rotation en particulier de 45°.

5. Dispositif conforme à l'une des revendications précédentes, **caractérisé en ce qu'**
en amont du récepteur (20) sont montés au moins deux éléments optiques en forme de coins (60), de préférence un nombre d'éléments optiques en forme de coins (60) correspondant au nombre d'éléments de réception (25), dont les surfaces sont décalées angulairement les unes par rapport aux autres et sur lesquels sont montés des filtres de polarisation, les plans de polarisation des filtres de polarisation étant décalés en rotation.

6. Dispositif conforme à l'une des revendications précédentes, **caractérisé en ce qu'**
en amont du récepteur (20) sont montées plusieurs bandes de filtres de polarisation (70) dont les plans de polarisation sont respectivement tournés les uns par rapport aux autres, sur lesquels sont montées plusieurs bandes de lames de phase (72) dont les phases sont respectivement décalées les unes par rapport au autres, et qui sont positionnées transversalement aux bandes de filtres de polarisation (70), cette confirmation étant de préférence montée sur la face arrière de plusieurs éléments optiques en forme de coins (74) dont les surfaces sont décalées angulairement.

7. Dispositif conforme à l'une des revendications précédentes, **caractérisé en ce qu'**
en amont du récepteur (20) est monté un élément produisant une double réfraction de préférence un prisme de Wollaston (50), qui est de préférence monté après une optique d'imagerie (51).

8. Dispositif conforme à l'une des revendications précédentes, **caractérisé en ce que**
le polariseur comporte au moins une lame de phase (18) qui est de préférence réalisée sous la forme d'une lame lambda/4 ou d'une lame lambda/2.

9. Dispositif conforme à l'une des revendications précédentes, **caractérisé en ce que**
l'émetteur (10) et le récepteur (20) peuvent être alimenté avec la même fréquence de modulation électrique.

10. Dispositif conforme à l'une des revendications précédentes, **caractérisé en ce qu'**
en aval du polariseur (12) est monté un réflecteur (16) par exemple un miroir ou un élément à réflexion diffuse.

11. Dispositif conforme à l'une des revendications précédentes, **caractérisé en ce qu'**
un diviseur de faisceau (40) est monté dans la marche du faisceau.

12. Dispositif conforme à l'une des revendications précédentes, **caractérisé en ce qu'**
il est prévu deux émetteurs (10) qui sont montés symétriquement par rapport à l'axe optique du récepteur.

13. Procédé de mesure de l'angle de rotation entre deux objets mobiles en rotation l'un par rapport à l'autre, selon lequel un émetteur (10) associé à l'un des objets émet de la lumière qui est soit polarisée soit polarisée par un filtre de polarisation, cette lumière frappant un récepteur (20) en passant au travers d'un polariseur, l'émetteur (10) et le polariseur tournant l'un par rapport à l'autre en fonction de l'angle de rotation et l'intensité lumineuse mesurée par le récepteur (20) étant exploitée entant que signal dépendant de l'angle de rotation, **caractérisé en ce que**
le récepteur (20) comporte plusieurs groupes similaires (30) d'éléments de réception (25) qui détectent de la lumière ayant des polarisations différentes, à l'intérieur de chacun des groupes (30) les plans de polarisation de deux éléments de réception respectifs (25) étant décalés en rotation l'un par rapport à l'autre.

14. Procédé conforme à la revendication 13,
**caractérisé en ce que**
l'on effectue la moyenne des signaux de réception des éléments de réception (25) qui présentent les mêmes plans de polarisation.

15. Procédé conforme à la revendication 13 ou 14,
**caractérisé en ce que**
l'on fait la moyenne des signaux de réception des éléments de réception (25) présentant des plans de polarisation différents en tenant compte de la différence des phases.
